# EUROPEAN PATENT SPECIFICATION

(11) **EP 3 199 605 B1**
(45) Date of publication and mention of the grant of the patent: **02.11.2022**
(21) Application number: 15844258.2
(22) Date of filing: 14.09.2015
(51) Int. Cl.: C09D 201/00, C09D 5/10, C09D 183/02, C09D 183/04, C23C 26/00, C23F 11/00

(54) **RUST-INHIBITING PAINT COMPOSITION AND APPLICATION FOR SAME**
ROSTSCHUTZANSTRICHZUSAMMENSETZUNG UND ANWENDUNG DAVON
COMPOSITION DE PEINTURE ANTIROUILLE ET MISE EN OEUVRE DE CELLE-CI

(30) Priority: 26.09.2014 JP 2014197099
(43) Date of publication of application: 02.08.2017
(73) Proprietor: Chugoku Marine Paints, Ltd., Hiroshima 739-0652 (JP)
(72) Inventor: OKADA, Masamitsu, Otake-shi, Hiroshima 739-0652 (JP)
(74) Representative: Hoffmann Eitle
(86) International application number: PCT/JP2015/075982
(87) International publication number: WO 2016/047479

(56) References cited:
- WO-A1-99/58274
- WO-A1-2014/014063
- WO-A1-2014/014063
- WO-A1-2014/032844
- JP-A- S61 589
- JP-A- S4 822 123
- JP-A- S5 441 937
- JP-A- S52 151 635
- JP-A- S53 119 932
- JP-A- S59 122 556
- JP-A- 2005 097 584
- JP-A- 2005 097 584
- US-A- 5 252 632

## Description

### Technical Field

The present invention relates to a rust-preventive coating composition which is excellent in rust prevention properties or the like used for a processing process or the like of a steel plate; and uses thereof.

### Background Art

Conventionally, large steel structures such as ships, marine structures, plants, bridges and overland tanks while being built, in order to be prevented from rusting, have their steel plate surfaces coated with rust-preventive coating materials. Known rust-preventive coating materials include organic rust-preventive coating materials such as wash primers, non-zinc epoxy primers and epoxy zinc-rich primers as well as inorganic zinc rust-preventive coating materials including siloxane-based binders and zinc powders. Of these rust-preventive coating materials, most widely used are inorganic zinc rust-preventive coating materials, which are excellent in weldability.

A steel plate coated with an inorganic zinc rust-preventive coating material is assembled by steps entailing a high temperature such as fusion-cutting, welding, and straightening. The temperature during fusion-cutting, welding, straightening, or the like of a steel plate reaches from several hundred degrees centigrade to about 1200°C which is near the melting point of iron. On the other hand, the melting point of zinc is 419°C, and zinc is rapidly oxidized when the temperature of zinc exceeds the temperature. For this reason, in a step such as fusion-cutting, welding, or straightening, zinc in a coating film is likely to be oxidized. When zinc in a coating film is oxidized, white rust composed of zinc oxide is generated on the surface of the coating film, causing a loss of zinc in the coating film. For this reason, rust prevention properties of the coating film deteriorate, and if the coating film is exposed outdoors, the coating film generates rust in a short time. For this reason, with respect to a thermally damaged portion, an elaborate secondary surface preparation such as power tool or sweep blasting is required when the coating film surface is coated with an overcoating material.

In the case of primary rust-preventive coating materials (shop primer), excellent adhesion property between the coating film and an overcoating film is required.

Patent Document 1 (JP 2005-97584 A) discloses a primary rust-preventive coating composition using amorphous glass powder including alkali metal oxide, and describes that, even when a steel plate coated with the coating composition is welded at a high rate not less than 100 cm/min, generation of welding defects such as pits or blowholes can be suppressed without deteriorating rust prevention properties. However, this coating composition has a variety of constraints such as a demand for a surface treatment step of amorphous glass powder by an acidic solution or an inorganic compound which generates a pyrolysis gas. Adhesion properties with an overcoating film which are essential for a primary rust-preventive coating composition are not described.

Patent Document 2 (JP 1995-268216 A) discloses a composition for coating containing (a) polysiloxane, (b) inorganic filler, and (c) an inorganic material generating a film in a melting state. Patent Document 2 describes that the composition may further contain zinc powder. However, prevention of oxidation of zinc and adhesion property with an overcoating film are not described.

Patent Document 3 (JP 1996-27424 A) discloses an inorganic coating material containing (a) silicone emulsion, (b) colloidal silica, and (c) alkali titanate which have an effect of improving heat resistance and rust prevention properties. Patent Document 3 describes that the coating material may contain zinc as a rust preventive material. However, prevention of oxidation of zinc is not described.

Patent Document 4 (JP 1999-510536 A) discloses a coating mixture containing (a) polysiloxane, (b) a reactive inorganic filler, (c) an inorganic material which forms a film as a molten material, (d) a pigment and/or a non-reactive inorganic filler, (e) reactive (oligo) silane, (f) a catalyst, and (g) other additives. Patent Document 4 describes that the coating mixture may contain zinc powder. However, prevention of oxidation of zinc and adhesion property with an overcoating film are not described.

### Related Art Documents

Patent Document 5 (WO 2014/032844 A1) is directed to anti-corrosive coating compositions for protecting iron and steel structures. In particular, Patent Document 5 relates to coating compositions comprising (a) a binder system selected from epoxy-based binder systems, polysiloxane-based binder systems, polyurethane-based binder systems, cyclized rubber-based binder systems, and phenoxy resin-based binder systems, (b) zinc particles, (c) hollow glass microspheres, and (d) a conductive pigment selected from the group consisting of graphite, carbon black, aluminium pigments, black iron oxide, antimony-doped tin oxide, mica coated with antimony-doped tin oxide, indium tin oxide, carbon nanotubes, carbon fibres, and any mixture thereof. Patent Document 5 furthermore concerns a kit of parts containing the composition, a method for its application, as well as metal structures coated with the composition.

In Patent Document 6 (WO 99/58274 A1), a coating compositions comprising zinc powder, hollow glass spheres, and a dry solid lubricant are milled to form flakes. The final product exhibits a reduced ratio of zinc pigment to binder. The solid lubricants are inorganic lubricants particularly carbon such as graphite or organic lubricants such as film-forming polymers for example polyfluoroethylenes but not materials with surface active groups, e.g. soaps.

Patent Document 7 (US 5,252,632 A) is directed to improved low-cost coating compositions comprising lightweight non-coated hollow glass microspheres having high isostatic crush resistance, low specific gravity and low oil absorption. Patent Document 7 describes the use of these compositions as cathodic coatings for prevention of corrosion in metallic substrates and their use as conductive coatings for attenuation of EMI/RFI interference in electronic components.

Patent Document 8 (WO 2014/014063 A1) describes a primary rust preventive coating composition which is characterized by containing (a) a siloxane-based binder that has a weight average molecular weight (Mw) of 1,000-6,000 in terms of standard polystyrene as determined by gel permeation chromatography (GPC), and (b) zinc dust that contains a flake zinc powder (b-1). This primary rust preventive coating composition is also characterized by a pigment volume concentration (PVC) of 35-60%; and a mass ratio (b)/(a) of the zinc dust (b) to the siloxane-based binder (a) in terms of SiO₂ of 1.0-5.0.

### Patent Documents

Patent Document 1: JP 2005-97584 A
Patent Document 2: JP 1995-268216 A
Patent Document 3: JP 1996-27424 A
Patent Document 4: JP 1999-510536 A
Patent Document 5: WO 2014/032844 A1
Patent Document 6: WO 99/58274 A1
Patent Document 7: US 5,252,632 A
Patent Document 8: WO 2014/014063 A1

### [Summary of Invention]

### [Technical Problem]

An object of the present invention is to solve the problems associated with the above-described conventional techniques and to provide a rust-preventive coating composition which has excellent rust prevention properties and has a favorable adhesion property with an overcoating film even after a rust-preventive coating film heated at a high temperature, for example, from 400 to 900°C, and uses thereof.

### [Solution to Problem]

In order to solve the above-described problems, the present inventors studied a rust-preventive coating composition containing a binder, zinc powder, and glass powder for the influence of the glass powder on a coating film formed from the coating composition. As a result, the present inventors found that the total content of Li₂O, Na₂O, and K₂O which are alkali metal oxide components contained in the glass powder has an influence on the adhesion property with an overcoating film, and that the softening point of the glass powder has an influence on rust prevention properties after a high temperature treatment, thereby completing the present invention.

That is, the present invention is
a rust-preventive coating composition comprising:
a binder (a);
a zinc powder and/or zinc alloy powder (b); and
a glass powder (c) which has a softening point of from 400 to 800°C and in which the total content of Li₂O, Na₂O and K₂O is not more than 12% by mass, wherein the mass ratio ((c) /(b)) of the glass powder (c) to the zinc powder and/or zinc alloy powder (b) is from 0.001 to 0.10, and the binder (a) is a silicon based binder.

In the rust-preventive coating composition, preferably, the binder (a) is a condensate of alkylsilicates, a condensate of methyltrialkoxysilanes, ammonium silicates, or an aqueous dispersion of colloidal silica.

The rust-preventive coating composition is, for example, a primary rust-preventive coating composition.

A rust-preventive coating film of the present invention is formed from the rust-preventive coating composition.

A substrate with a rust-preventive coating film of the present invention comprises a substrate, and the rust-preventive coating film formed on a surface of the substrate.

A method for producing a substrate with a rust-preventive coating film comprises: a step of applying the rust-preventive coating composition on a surface of a substrate; and a step of curing the coating composition applied to form a rust-preventive coating film.

### [Advantageous Effects of Invention]

The present invention can form a rust-preventive coating film having excellent welding properties, and can provide a rust-preventive coating composition which has excellent rust prevention properties and has an excellent adhesion property with an overcoating film by preventing oxidation of zinc or the like even after a rust-preventive coating film heated at a high temperature, for example, from 400 to 900°C, and a variety of uses using the rust-preventive coating composition.

### [Description of Embodiments]

Hereinafter, a rust-preventive coating composition (hereinafter, also referred to as "coating composition"), a rust-preventive coating film, a substrate with a rust-preventive coating film, and a method for producing the same of the present invention including preferred embodiment thereof will be described in detail.

### [Rust-Preventive Coating Composition]

A rust-preventive coating composition of the present invention contains a binder (a), zinc powder and/or zinc alloy powder (b), and glass powder (c) which has a softening point of from 400 to 800°C, and in which the total content of Li₂O, Na₂O, and K₂O is not more than 12% by mass, wherein the mass ratio ((c)/(b)) of the glass powder (c) to the zinc powder and/or zinc alloy powder (b) is from 0.001 to 0.10, and the binder (a) is a silicon based binder. The composition may further contain one type or two or more types selected from binders other than the binder (a), pigments other than the zinc powder and/or zinc alloy powder (b) and the glass powder (c), molybdenum, molybdenum compound, coloring pigments, additives, solvents, and the like.

A rust-preventive coating composition of the present invention is usually used as a two component-type composition. That is, the coating composition is usually composed of a base (vehicle) component and a pigment component. It is preferable that before use, the base component and the pigment component are separately stored, and immediately before use, these are sufficiently stirred and mixed with each other to prepare the rust-preventive coating composition.

The base component usually contains a binder (a) and a solvent. As the case may be, the base component may contain at least one selected from other binders, and additives.

The pigment component usually contains zinc powder and/or zinc alloy powder (b) and glass powder (c). The pigment component may, as needed, contain at least one selected from other pigments, molybdenum, molybdenum compounds, coloring pigments, and additives. In the case of an organic solvent coating, the pigment component may further contain an organic solvent, which is prepared in accordance with a conventional method. In the case of a waterborne coating, the pigment component is prepared in accordance with a conventional method, and it is preferable that water is not contained in the pigment component.

### <Binder (a)>

The rust-preventive coating composition of the present invention contains a binder (a) as an essential component.

The binder (a) is a silicon based binder such as a condensate of alkylsilicates, a condensate of methyltrialkoxysilanes, ammonium silicates, or aqueous dispersion of colloidal silica.

Examples of the alkylsilicate include a compound such as tetramethylorthosilicate, tetraethylorthosilicate, tetra-n-propylorthosilicate, tetra-i-propylorthosilicate, tetra-n-butylorthosilicate, or tetra-sec-butylorthosilicate; or a compound such as methylpolysilicate, or ethylpolysilicate.

Examples of the methyltrialkoxysilane include a compound such as methyltrimethoxysilane or methyltriethoxysilane.

Among condensates of alkylsilicates and condensates of methyltrialkoxysilanes, condensates of alkylsilicates are preferable; condensates of tetraethylorthosilicates are more preferable; and a partial hydrolysis condensate of ethylsilicate 40 (trade name; manufactured by COLCOAT CO., LTD.) of an initial condensate of tetraethylorthosilicates is particularly preferable.

Examples of the ammonium silicate include ammonium silicate containing an amine component or an ammonium component. Particularly, examples of the ammonium silicate include an ammonium silicate composed of primary amine, secondary amine, or tertiary amine and a silicic acid, and a quaternary ammonium silicate composed of a quaternary ammonium and a silicic acid. Examples of the ammonium silicate containing an amine component or an ammonium component include QAS-25 (trade name; manufactured by Nissan Chemical Industries, Ltd., SiO₂ solid content concentration: 25% by mass ), QAS-40 (trade name; manufactured by Nissan Chemical Industries, Ltd., SiO₂ solid content concentration: 40% by mass), ammonium silicate 17804 (trade name; manufactured by Nippon Chemical Industrial CO., LTD., SiO₂ solid content concentration: 40% by mass ), ammonium silicate 88J3 (trade name; manufactured by Nippon Chemical Industrial CO., LTD. , SiO₂ solid content concentration: 20% by mass).

Examples of the aqueous dispersion of colloidal silica include a hydrosol of silicic acid anhydride formed by dispersing ultra-fine particles of silicic acid anhydride in water, using water as a dispersion medium. Examples of commercially available aqueous dispersion of colloidal silica include SNOWTEX 20 (trade name; manufactured by Nissan Chemical Industries, Ltd., solid content concentration: 20% by mass), and SNOWTEX 40 (trade name; manufactured by Nissan Chemical Industries, Ltd., solid content concentration: 40% by mass).

The binder (a) can be produced by a hitherto known method. The binder (a) may be used singly, or two or more kinds thereof may be used in combination.

The solid content of the binder (a) to the non-volatile content in the rust-preventive coating composition is usually from 2 to 70% by mass, preferably from 3 to 50% by mass, and more preferably from 5 to 30% by mass. Here, a heating residue (non-volatile content) of the coating composition can be measured in accordance with a standard (heating temperature: 125°C, and heating time: 60 minutes) of JIS K5601 1-2.

### <Zinc Powder and/or Zinc Alloy Powder (b)>

The rust-preventive coating composition of the present invention contains zinc powder and/or zinc alloy powder (b) as an essential component.

The zinc powder and zinc alloy powder functions as a rust-preventive pigment that prevents a steel plate from rusting.

Examples of the zinc alloy include an alloy formed by zinc and at least one selected from aluminum, magnesium and tin, preferably zinc-aluminum alloy and zinc-tin alloy.

Zinc powder and zinc alloy powder in a variety of shapes such as a spherical shape or a flaky shape can be used.

The term "spherical shape" refers to a shape close to a sphere, and the aspect ratio is not restricted to a particular range, and preferably, is usually from 1 to 3.

Examples of commercially available spherical zinc powder include F-2000 (trade name; manufactured by The Honjo Chemical Corporation).

Flaky zinc powder and zinc alloy powder having a median diameter (D50) of not more than 30 µm, and having an average thickness of not more than 1 µm are preferable.

Examples of commercially available flaky zinc powder include STANDART Zinc flake GTT, STANDART Zinc flake G (trade name; manufactured by ECKART GmbH) . Examples of commercially available flaky zinc alloy powder include STAPA 4 ZNAL7 (alloy of zinc and aluminum; trade name; manufactured by ECKART GmbH), STAPA 4 ZNSN30 (alloy of zinc and tin; trade name; manufactured by ECKART GmbH) .

Regarding the zinc powder and/or zinc alloy powder (b), either or both of zinc powder and zinc alloy powder can be used, and each of the zinc powder and zinc alloy powder can be used singly, or two or more kinds thereof may be used in combination.

The content of zinc powder and/or zinc alloy powder (b) with respect to the non-volatile content of the rust-preventive coating composition is usually from 20 to 90% by mass, preferably from 30 to 80% by mass, and more preferably from 40 to 70% by mass.

### <Glass Powder (c)>

The rust-preventive coating composition of the present invention contains, as an essential component, glass powder (c) which has a softening point of from 400 to 800°C, in which the total content of Li₂O, Na₂O, and K₂O is not more than 12% by mass. The glass powder (c) functions as an oxidation inhibitor of zinc when a coating film is heated at a high temperature, for example, from 400 to 900°C.

The glass powder is formed by, for example, heating and melting a compound which constitutes the glass at about from 1000 to 1100°C for a predetermined time, and, after cooling, being granulated in a powdery shape by a trituration apparatus. Examples of a component which constitutes a glass generally include SiO₂, B₂O₃, Al₂O₃, ZnO, BaO, MgO, CaO, SrO, Bi₂O₃, Li₂O, Na₂O, K₂O, PbO, P₂O₅, In₂O₃, SnO, CuO, Ag₂O, V₂O₅, and TeO₂. Although PbO can be used as a compound which constitutes a glass, PbO is desirably not used since PbO may adversely affect the environment. The glass powder (c) contains the above-described compound in a desired ratio to attain a variety of glass properties such as a softening point, a thermal expansion coefficient, a permittivity, a transparency, and a color.

There are two important properties of the glass powder (c) used in the present invention: that the softening point is from 400 to 800°C; and that the total content of Li₂O, Na₂O and K₂O which are alkali metal oxide components in the glass powder is not more than 12% by mass.

The softening point of the glass powder (c) is from 400 to 800°C, preferably from 420 to 750°C, and further preferably from 450 to 700°C. In cases in which the softening point of the glass powder is in this range, even when a coating film formed from the coating composition is treated at a high temperature, for example, from 400 to 900°C, the molten glass powder coats the surface of zinc and zinc alloy, thereby suppressing oxidation of zinc, and excellent rust prevention properties can be exhibited even after the coating film is heated at from 400 to 900°C. If the softening point of the glass powder is below 400°C, since the glass powder melts before zinc and zinc alloy, the surface of zinc cannot be sufficiently coated. On the other hand, if the softening point of the glass powder is above 800°C, an effect obtained when molten glass covers the surface of zinc and zinc alloy is not obtained from the time when the temperature exceeds the melting point of zinc and zinc alloy to the time when the temperature reaches 800°C, thereby progressing oxidation of zinc.

The softening point of the glass powder (c) is determined using a Lyttelton viscometer by a determination method by a temperature at which the viscosity coefficient η reaches 107.6.

The total content of Li₂O, Na₂O, and K₂O which are alkali metal oxide components contained in glass powder (c) in the rust-preventive coating composition of the present invention is not more than 12% by mass, preferably not more than 10% by mass, and further preferably not more than 8% by mass. When the total content of the alkali metal oxide components contained in the glass powder is in this range, favorable adhesion properties between a coating film formed by the coating composition and an overcoating film can be obtained. When the total content of the alkali metal oxide components contained in the glass powder in terms of glass mass is above 12% by mass, favorable overcoating adhesion properties cannot be obtained. This is considered to be because an alkali metal ion remained in the coating film inhibits adhesion properties with an overcoating film. The smaller, the total content of Li₂O, Na₂O and K₂O is, the more preferable, and most preferably, Li₂O, Na₂O and K₂O are not contained.

The content of Li₂O, Na₂O and K₂O contained in the glass powder (c) can be measured by fluorescence X-ray analysis (detector; wavelength dispersion type).

Examples of the commercially available glass powder (c) include NB122A (trade name; manufactured by Central Glass Co., Ltd., softening point 400°C ), B20 (trade name; manufactured by Central Glass Co., Ltd., softening point 480°C), AZ739 (trade name; manufactured by Central Glass Co., Ltd., softening point 605°C), PFL20 (trade name; manufactured by Central Glass Co., Ltd., softening point 700°C), and LAB1603 (trade name; manufactured by Central Glass Co., Ltd., softening point 790°C) .

B₂O₃ which is one of components constituting the glass is by itself a glassy material having a softening point of about 450°C can be used as the glass powder (c) of the present invention. Examples of the commercially available B₂O₃ include boron oxide (trade name; manufactured by Kanto Chemical Co., Inc., cica first grade).

Generally, glass powder composed of a plurality of components can attain a variety of properties such as a desired softening point, water resistance, stability, thermal expandability, or transparency, by adjusting the combination or the blending amount of a variety of components.

The content of the glass powder (c) with respect to the non-volatile content in the rust-preventive coating composition is usually from 0.05 to 26% by mass, preferably from 0.15 to 20% by mass, and more preferably from 0.5 to 15% by mass.

The median diameter (D50) of the glass powder (c) is usually from 1 to 10 µm, preferably from 1.5 to 8 µm, and more preferably from 2 to 6 µm.

The mass ratio ((c) /(b)) of the glass powder (c) to the zinc powder and/or zinc alloy powder (b) in the rust-preventive coating composition of the present invention is adjusted to from 0.001 to 0.10. When the mass ratio ((c) / (b)) of the glass powder (c) to the zinc powder and/or zinc alloy powder (b) is in the above-described range, rust prevention properties are favorably maintained both in a case in which a coating film is heated and in a case in which a coating film is not heated.

### <Other Binders>

The rust-preventive coating composition of the present invention may contain a binder other than the binder (a) in a range that is not detrimental to the objects and effects of the present invention. Examples of the other binder include acrylic emulsions, and polyvinyl butyral resins.

Examples of the acrylic emulsions include PRIMAL E-357 (trade name; manufactured by Dow Chemical Japan Limited). Examples of the polyvinyl butyral resin include S-LEC BM-1 (trade name; manufactured by Sekisui Chemical Co., Ltd.), and S-LEC BL-1 (trade name; manufactured by Sekisui Chemical Co., Ltd.).

### <Other Pigments>

The rust-preventive coating composition of the present invention may contain another pigment other than the zinc powder and/or zinc alloy powder (b) and the glass powder (c) for the purpose of securing a variety of coating film properties. The other pigment may be used singly, or two or more kinds thereof may be used in combination.

For example, the rust-preventive coating composition of the present invention may contain a rust-preventive pigment other than the zinc powder and/or zinc alloy powder (b) for the purpose of auxiliary securing rust prevention properties of a coating film. Examples of the rust-preventive pigment include a zinc phosphate-based compound, a calcium phosphate-based compound, an aluminum phosphate-based compound, a magnesium phosphate-based compound, a zinc phosphite-based compound, a calcium phosphite-based compound, an aluminum phosphite-based compound, a strontium phosphite-based compound, an aluminum tripolyphosphate-based compound, a zinc cyanamide-based compound, a borate compound, a nitro compound, and a compound oxide. Examples of the commercially available rust-preventive pigment include: LF BOSEI CP-Z (trade name; manufactured by KIKUCHI COLOR Co., Ltd.) as a zinc (aluminum) phosphate-based compound; PROTEX YM-70 (trade name; manufactured by Taihei Chemical Industrial Co. , Ltd.) as a zinc (calcium) phosphite-based compound; PROTEX YM-92NS (trade name; manufactured by Taihei Chemical Industrial Co., Ltd.) as a zinc (strontium) phosphite-based compound; KWhite #84 (trade name; manufactured by TAYCA CORPORATION) as an aluminum tripolyphosphate-based compound; and LF BOSEI ZK-32 (manufactured by KIKUCHI COLOR Co., Ltd.) as a zinc cyanamide-based compound.

The rust-preventive coating composition of the present invention may further contain at least one inorganic powder selected from metal powder (excluding zinc powder, zinc alloy powder, and molybdenum powder), zinc compound powder (excluding zinc phosphate-based compound, zinc phosphite-based compound, zinc cyanamide-based compound), mineral powder, and inorganic compound powder generating a pyrolysis gas.

Metal powder has conductivity, facilitating migration of an iron ion or a zinc ion, and has an action of improving the rust-preventive effect of a coating film. Examples of metal powder include Fe-Si powder, Fe-Mn powder, Fe-Cr powder, magnetic iron powder, and iron phosphide. Examples of commercially available metal powder include ferrosilicon (trade name; manufactured by KINSEI MATEC CO., LTD.), ferromanganese (trade name; manufactured by KINSEI MATEC CO., LTD.), ferrochrome (trade name; manufactured by KINSEI MATEC CO., LTD.), iron sand powder (manufactured by KINSEI MATEC CO., LTD.), and Ferrophos 2132 (manufactured by Occidental Chemical Corporation).

Zinc compound powder is considered to have a function of adjusting the activity of oxidation reaction such as the degree of ionization (generation of Zn²⁺) of the zinc powder and/or zinc alloy powder (b). The inclusion of zinc compound powders in the rust-preventive coating composition of the present invention can provide the composition with further appropriate rust prevention properties. Examples of the zinc compound powders include zinc chloride, zinc oxide, zinc sulfide, and zinc sulfate. Examples of commercially available products of the zinc compound powders include zinc oxide #1 (manufactured by SAKAI CHEMICAL INDUSTRY CO.,TD.), zinc oxide JIS #3 (manufactured by Hakusui Tech Co., Ltd., SAKAI CHEMICAL INDUSTRY CO., LTD.), Sachtolich HD (zinc sulfide; trade name; manufactured by Sachleben Chemie GmbH), and zinc chloride (manufactured by Nagai Chemical Industrial Co., Ltd.) .

Examples of the mineral powders include titanium mineral powder, silica powder, soda feldspar, potassium feldspar, zirconium silicate, wollastonite and diatomaceous earth. Examples of commercially available products of the mineral powders include Rutile Flour S (manufactured by KINSEI MATEC CO., LTD.), Ilmenite powder (manufactured by KINSEI MATEC CO., LTD.), A-PAX 45M (manufactured by KINSEI MATEC CO., LTD.), ceramic powder OF-T (manufactured by KINSEI MATEC CO., LTD.), Aplite (manufactured by KINSEI MATEC CO., LTD.), Silica MC-O (manufactured by Maruo Calcium Co., Ltd.), Barite BA (manufactured by Sakai Chemical Industry Co., Ltd.), Radiolite (manufactured by Showa Chemical Industry Co., Ltd.), and Celite 545 (manufactured by Johns Manville) .

The pyrolysis gas-generating inorganic compound powders are inorganic compound powders that undergo thermal decomposition, for example, thermal decomposition at from 500 to 1500°C, to generate a gas such as a CO₂ gas or a F₂ gas. The inorganic compound powders are incorporated into a coating composition from which a coating film is formed, and when a steel plate having the coating film is welded in a melting pool, a bubble, generated from organic substances contained in binders and the like, is removed from the melting pool together with a gas derived from the inorganic compound powders. Examples of the inorganic compound powders include calcium fluoride, calcium carbonate, magnesium carbonate and strontium carbonate. Examples of commercially available products of the inorganic compound powders include Fluorite 400-mesh (manufactured by KINSEI MATEC CO., LTD.), NS#400 (manufactured by NITTO FUNKA KOGYO K.K.), Magnesium Carbonate (manufactured by Tomita Pharmaceutical Co., Ltd.) and Strontium Carbonate A (manufactured by The Honjo Chemical Corporation).

### <Molybdenum and Molybdenum Compound>

The rust-preventive coating composition of the present invention can contain either or both of molybdenum (metal molybdenum) and a molybdenum compound. These function as oxidation inhibitor of zinc (as a so-called white-rust inhibitor) .

For less frequent occurrence of white rust, the rust-preventive coating composition of the present invention may contain, as an oxidation inhibitor of zinc (so-called white rust inhibitor), either or both of molybdenum (metal molybdenum) and a molybdenum compound.

Examples of the molybdenum compound include molybdenum oxides such as molybdenum trioxide, molybdenum sulfide, molybdenum halides, molybdic acid, ammonium molybdate, phosphomolybdic acid, silicomolybdic acid, alkali metal salts of molybdic acid, alkali metal salts of phosphomolybdic acid, alkali metal salts of silicomolybdic acid, alkali earth metal salts of molybdic acid, alkali earth metal salts of phosphomolybdic acid, alkali earth metal salts of silicomolybdic acid, manganese salt of molybdic acid, manganese salt of phosphomolybdic acid, manganese salt of silicomolybdic acid, basic nitrogen-containing compound salts of molybdic acid, basic nitrogen-containing compound salts of phosphomolybdic acid, and basic nitrogen-containing compound salts of silicomolybdic acid.

The molybdenum compounds may be used singly, or two or more kinds thereof may be used in combination.

When either or both of molybdenum and a molybdenum compound are used, the total content of molybdenum and a molybdenum compound is preferably 0.05 to 5.0 parts by mass, more preferably 0.3 to 3 . 0 parts by mass, still more preferably 0.5 to 2.0 parts by mass, based on 100 parts by mass of the zinc powder and/or zinc alloy powder (b). When the content is the above range, sufficient zinc-antioxidization effect is achieved, the rust-preventive ability of the zinc powder and/or zinc alloy powder (b) is prevented from decreasing, and the rust prevention properties of the coating film can be maintained.

### <Coloring Pigment>

For the purpose of providing a coating film with desired color, the rust-preventive coating composition of the present invention may contain a coloring pigment. Examples of the coloring pigment include titanium oxide, iron oxide, carbon black, copper-chromium black pigment, phthalocyanine green, and phthalocyanine blue. Examples of the commercially available coloring pigment include TITONE R-5N (manufactured by SAKAI CHEMICAL INDUSTRY CO.,LTD.), iron oxide No.404 (manufactured by Morishita Bengara Kogyo CO., Ltd.), Mitsubishi Carbon Black MA100 (manufactured by Mitsubishi Chemical Corporation), DAIPYROXIDE BLACK #9510 (manufactured by Dainichiseika Color & Chemicals Mfg. Co., Ltd.), Heliogen Green L8690 (manufactured by BASF Japan Ltd.), and FASTOGEN Blue 5485 (manufactured by DIC Corporation) .

The coloring pigments may be used singly, or two or more kinds thereof may be used in combination.

The content of the coloring pigment with respect to the non-volatile content in the rust-preventive coating composition is usually from 0.1 to 20% by mass, preferably from 0.2 to 15% by mass, and more preferably from 0.3 to 10% by mass.

### <Additive>

The rust-preventive coating composition of the present invention may contain additives. The additives are materials used in order to improve or maintain the performance of coating materials and coating films. Examples of the additives include anti-settling agents, drying agents, fluidity control agents, antifoaming agents, dispersing agents, color-separation preventive agents, anti-skinning agents, plasticizers, and ultraviolet absorbers. The additives may be used singly, or two or more kinds thereof may be used in combination.

Examples of the anti-settling agent include organic bentonite type, oxidized polyethylene type, humed silica type and amide type. Examples of commercially available products of the anti-settling agents include TIXOGEL MPZ (trade name; manufactured by BYK Additives GmbH), BENTONE HD (trade name; manufactured by Elementis Specialties, Inc.), Disparlon 4200-20 (trade name; manufactured by Kusumoto Chemicals, Ltd.), Disparlon A630-20X (trade name; manufactured by Kusumoto Chemicals, Ltd.), and AEROSIL 200 (trade name; manufactured by Nippon Aerosil Co. , Ltd.) .

The anti-settling agents may be used singly, or two or more kinds thereof may be used in combination.

The content of the anti-settling agent with respect to the non-volatile content of the rust-preventive coating composition is usually from 0.1 to 15% by mass, preferably from 0.2 to 10% by mass, and more preferably from 0.3 to 8% by mass.

### <Solvent>

For the rust-preventive coating composition of the present invention, an organic solvent or water can be used as a dilute solvent of a base component or a dispersion solvent of a pigment or the like.

Examples of the organic solvent include organic solvents commonly used in the field of coating materials, such as alcohol solvents, ester solvents, ketone solvents, aromatic solvents, and glycol solvents.

Examples of the alcohol solvents include methanol, ethanol, isopropanol and butanol. Examples of the ester solvents include ethyl acetate and butyl acetate. Examples of the ketone solvents include methyl isobutyl ketone and cyclohexanone. Examples of the aromatic solvents include benzene, xylene and toluene. Examples of the glycol solvents include propylene glycol monomethyl ether and propylene glycol monomethyl ether acetate. The solvents may be used singly, or two or more kinds thereof may be used in combination.

In the rust-preventive coating composition of the present invention, the content of the solvent is usually 30 to 90% by mass, preferably 35 to 85% by mass, more preferably 40 to 80% by mass.

### [Uses of Rust-Preventive Coating Composition]

The rust-preventive coating composition of the present invention is preferably a coating composition for primary rust-prevention.

The rust-preventive coating composition of the present invention is suitably used mainly in steels for large structures such as ships, marine structures, plants, bridges and overland tanks. When the rust-preventive coating composition of the present invention is used as a primary rust-preventive coating composition, it is demanded that a steel is protected from a rust during the building period without adversely affecting fusion-cutting, welding, or the like of a building step of a large structure. In the case of a primary rust-preventive coating composition, adhesion property with an overcoating film is also demanded. The rust-preventive coating composition of the present invention has excellent rust prevention properties and adhesion properties with an overcoating film which solve the above-described conditions.

### [Rust-Preventive Coating Film and Substrate with Rust-preventive Coating Film]

A rust-preventive coating film of the present invention is formed from the above-described rust-preventive coating composition; and a substrate with a rust-preventive coating film of the present invention includes a substrate, e. g., a steel plate, and the rust-preventive coating film composed of the above-described rust-preventive coating composition that is formed on the surface of the substrate.

Usually, a substrate on which the rust-preventive coating composition of the present invention is coated is subjected to blasting under a condition equivalent to a rust removal degree of not less than Sa2 1/2 in accordance with ISO 8501-1.

The primary rust-preventive coating film usually has an average dry film thickness of not more than 30 µm, preferably from 5 to 25 µm. The average dry film thickness is measured by using an electromagnetic film thickness measuring instrument.

Further, a rust-preventive coating film formed from the rust-preventive coating composition of the present invention can be coated with an anticorrosive coating such as epoxy-based, chlorinated rubber-based, oil-based, epoxy ester-based, acryl-based, vinyl-based, or inorganic zinc-based. The rust-preventive coating film of the present invention also has excellent adhesion property with an overcoating film.

### [Method for Producing Substrate with Rust-Preventive Coating Film]

A method for producing a substrate with a rust-preventive coating film, according to the present invention, includes a step of applying the above-described rust-preventive coating composition on a surface of a substrate such as a steel plate (coating step) and a step of curing the coating composition applied to form a primary rust-preventive coating film (curing step).

In the coating step, the rust-preventive coating composition of the present invention (in the case of a two component-type composition, a coating material obtained by mixing the base component with the pigment component) is applied, by a hitherto known method such as an air spray and an airless spray, on a surface of a substrate such as steel plates, to form an uncured coating film. A coating machine generally used in the application of the coating material in e. g., ship yards and iron works is mainly an airless spray or a line coating machine. In the line coating machine, the film thickness is controlled by coating conditions including line speed, coating pressure of an air spray and airless spray and so on provided within the coating machine, and the size of spray nozzle (aperture diameter).

In the curing step, the curing temperature (drying temperature) is usually 5 to 40°C, preferably 10 to 30°C; and curing time (drying time) is usually 3 to 15 minutes, preferably 5 to 10 minutes. In the present invention, even when a substrate with a rust-preventive coating film is heated, excellent rust prevention properties and adhesion property with an overcoating film are exhibited. That is, the substrate with a rust-preventive coating film of the present invention can attain improvement of rust prevention properties and adhesion properties with an overcoating film after being heated at a high temperature, for example, from 400 to 900°C at the same time.

### EXAMPLES

Hereinafter, the present invention will be described more specif ically with reference to Examples, but the present invention is in no way limited by these Examples. In the following section including Examples, "part(s)" means "part(s) by mass" unless otherwise noted.

### [Preparation Example 1] Preparation of Condensate of Alkylsilicate

31.5 g of Ethyl Silicate 40 (manufactured by COLCOAT CO., LTD.), 10.4 g of industrial ethanol, 5 g of deionized water, and 0.1 g of 35% hydrochloric acid were introduced to a container, and stirred at 50°C for 3 hours, and thereto 53 g of isopropyl alcohol was added. A solution containing an alkylsilicate condensate was thus prepared.

### [Preparation Example 2] Preparation of Waterborne Base Component 1

35.0 g of SNOWTEX 20 (manufactured by Nissan Chemical Industries, Ltd.) and 1.17 g of PRIMAL E-357 (trade name; manufactured by Dow Chemical Japan Limited) were introduced into a polyethylene container to be dispersed for 10 minutes by a high-speed disperser. A waterborne base component 1 was thus prepared.

### [Preparation Example 3] Preparation of Waterborne Base Component 2

30.24 g of QAS-25 (manufactured by Nissan Chemical Industries, Ltd.) was introduced into a polyethylene container to be dispersed for 10 minutes by a high-speed disperser. A waterborne base component 2 was thus prepared.

### [Preparation Example 4] Preparation of Pigment Paste Component

Raw materials listed on Tables 1, 2, 4, and 5 which are described as pigment paste components in Examples and Comparative Examples, and raw materials listed on Table 3 which are described as pigment paste components /pigment powder components in Example 15, excluding zinc powder (spherical zinc powder, flaky zinc powder, or flaky zinc alloy powder) were individually introduced into a polyethylene container, to which glass beads were added, and were shaken with a paint shaker for 3 hours, and then, zinc powder was added thereto. The mixture was shaken for 5 minutes to disperse the pigment. By using a 80-mesh filter, the glass beads were removed to prepare pigment paste components. The pigment paste components were used in Examples 1 to 15, 18 to 23, and Comparative Examples 1 to 3, 6, and 7 below.

### [Preparation Example 5] Preparation of Pigment Powder Component

Raw materials listed on table 3 which are described as pigment paste components /pigment powder components in Examples 16 and 17 and Comparative Examples 4 and 5 were individually introduced into a desktop mixer and dispersed for 5 minutes to prepare pigment powder components. The pigment powder components were used in Examples 16 and 17 and Comparative Examples 4 and 5 below.

### [Examples 1 to 15, 18 to 23 and Comparative Examples 1 to 3, 6 and 7]

In Examples 1 to 15, 18 to 23 and Comparative Examples 1 to 3, 6 and 7, a condensate of alkylsilicate of Preparation Example 1 which is a base component and a pigment paste component of Preparation Example 4 which is a pigment component were introduced into a polyethylene container in such a manner that the proportions of the components were ratios (in terms of mass) described in Tables 1 to 5, and the mixture was dispersed by a high-speed disperser for 10 minutes to prepare a rust-preventive coating composition. Examples 9 and 10 are for reference only and outside the scope of the claimed invention.

### [Example 16 and Comparative Example 4]

In Example 16 and Comparative Example 4, a waterborne base component 1 of Preparation Example 2 which is a base component and a pigment powder component of Preparation Example 5 which is a pigment component were introduced into a polyethylene container in such a manner that the proportions of the components were ratios (in terms of mass) described in Table 3, and ion exchange water was added thereto as a diluent. The mixture was dispersed by a high-speed disperser for 10 minutes to prepare a waterborne rust-preventive coating composition.

### [Example 17 and Comparative Example 5]

In Example 17 and Comparative Example 5, a waterborne base component 2 of Preparation Example 3 which is a base component and a pigment powder component of Preparation Example 5 which is a pigment component were introduced into a polyethylene container in such a manner that the proportions of the components were ratios (in terms of mass) described in Table 3, and ion exchange water was added thereto as a diluent. The mixture was dispersed by a high-speed disperser for 10 minutes to prepare a waterborne rust-preventive coating composition.

Summary of components listed on Tables 1 to 5 are as follows. The contents of Li₂O, Na₂O and K₂O in the glass powder are listed on the Tables.
Solution of condensate of alkylsilicate: solution of condensate of alkylsilicate prepared in Preparation Example 1 (solid content concentration: 12.6% by mass)
Colloidal silica: SNOWTEX 20 (manufactured by Nissan Chemical Industries, Ltd., solid content concentration: 20% by mass)
Acrylic emulsion: PRIMAL E-357 (manufactured by Dow Chemical Japan Limited, solid content concentration: 48% by mass)
Ammonium silicate: QAS-25 (manufactured by Nissan Chemical Industries, Ltd., SiO₂ solid content concentration: 25% by mass)
Spherical zinc powder: F-2000 (manufactured by The Honjo Chemical Corporation)
Flaky zinc powder: STANDART Zinc flake GTT (manufactured by ECKART GmbH)
Flaky zinc alloy powder: STAPA 4 ZNAL7 (alloy of zinc and aluminum, manufactured by ECKART GmbH)
Anti-settling agent I: TIXOGEL MPZ (manufactured by BYK Additives GmbH)
Anti-settling agent II: BENTONE HD (manufactured by Elementis Specialties, Inc.)
Potassium feldspar: ceramic powder OF-T (manufactured by KINSEI MATEC CO., LTD.)
Glass powder 1 (softening point 389°C): DPS300 (manufactured by ASAHI GLASS CO., LTD.)
Glass powder 2 (softening point 400°C): NB122A (manufactured by Central Glass Co., Ltd.)
Glass powder 3 (softening point 480°C): B20 (manufactured by Central Glass Co., Ltd.)
Glass powder 4 (softening point 605°C): AZ739 (manufactured by Central Glass Co., Ltd.)
Glass powder 5 (softening point 700°C): PFL20 (manufactured by Central Glass Co., Ltd.)
Glass powder 6 (softening point 790°C) : LAB1603 (manufactured by Central Glass Co., Ltd.)
Glass powder 7 (softening point 808°C) : ASF1717 (manufactured by ASAHI GLASS CO., LTD.)
Glass powder 8 (softening point 510°C): TA149 (manufactured by Central Glass Co., Ltd.)
Glass powder 9 (softening point 750°C): APS325 (manufactured by Pure Mick, Co., Ltd.)

### [Evaluation Method and Evaluation Criteria]

### (1) Rust-Prevention Properties of Rust-Preventive Coating Film (Rusting)

A sandblasted surface of a sandblasted plate (JIS G3101, SS400, dimension: 150 mm × 70 mm × 2.3 mm) was coated with the rust-preventive coating composition by using the line coating machine. Subsequently, in accordance with JIS K5600 1-6, the sandblasted plate coated with the rust-preventive coating composition was dried in a thermostatic chamber at a temperature 23°C at a relative humidity of 50% for 1 week, to prepare a test plate having an average dry film thickness listed on Tables 1 to 5 composed of the primary rust-preventive coating film and the sandblasted plate. The average dry film thickness was measured by using an electromagnetic film thickness measuring instrument "LE-370" (trade name; manufactured by Kett Electric Laboratory) .

The test plate was placed in a muffle furnace maintained at a temperature (from 400 to 1000°C) listed on Tables 1 to 5, heated for 3 minutes, taken out, and cooled to room temperature. This test plate was immersed in artificial sea water (salt content 3%) for 2 weeks.

In accordance with ASTM D 610, the percentage (%) of the rusting area to the total area of the test plate after immersion for 2 weeks was determined, and the state of rusting was evaluated. The evaluation criteria are as follows. The results are shown in Tables 1 to 5.

### [Evaluation Criteria for State of Rusting (ASTM D610)]

10: No rusting, or the percentage of rusting area with respect to the total area of the test plate is not more than 0.01%
9: the percentage of rusting area with respect to the total area of the test plate is more than 0.01% and not more than 0.03%
8: the percentage of rusting area with respect to the total area of the test plate is more than 0.03% and not more than 0.1%
7: the percentage of rusting area with respect to the total area of the test plate is more than 0.1% and not more than 0.3%
6: the percentage of rusting area with respect to the total area of the test plate is more than 0.3% and not more than 1%
5: the percentage of rusting area with respect to the total area of the test plate is more than 1% and not more than 3%
4: the percentage of rusting area with respect to the total area of the test plate is more than 3% and not more than 10%
3: the percentage of rusting area with respect to the total area of the test plate is more than 10% and not more than 16%
2: the percentage of rusting area with respect to the total area of the test plate is more than 16% and not more than 33%
1: the percentage of rusting area with respect to the total area of the test plate is more than 33% and not more than 50%
0: the percentage of rusting area with respect to the total area of the test plate is more than 50% to 100%

### (2) Adhesion Property with Overcoating Film

A rust preventive coating composition was applied to the sandblasted surface of a sandblasted plate (JIS G 3101, SS 400, dimension: 150 mm × 70 mm × 2.3 mm) using a line coating machine. Subsequently, the sandblasted plate coated with the anticorrosive paint composition was left to stand for 1 week in a thermostatic chamber at a temperature of 23°C and a relative humidity of 50% according to the standard of JIS K 5600 1-6 to form rust-preventive coating films having average dry film thicknesses listed on Tables 1 to 5. A two component-type epoxy anticorrosive coating having compositions listed on Table 6 was coated on this rust-preventive coating film with an air spray gun, and allowed to stand for 1 week to form a cured coating film (overcoating film) having a thickness of 320 µm.

The test plate was left to stand for 180 days in a thermostatic chamber at a temperature of 50°C and a relative humidity of 98%.

To a surface of the overcoating film of the left test plate, a bottom surface of a cylindrical mild-steel jig having a diameter of 16 mm, a length of 20 mm, and an area of the bottom surface of 2 cm² was bonded with an epoxy adhesive, and they were allowed to stand for 24 hours. Thereafter, a head of the jig was pulled in the vertical direction of the overcoating film surface by using a pull gauge (manufactured by Motofuji Co., Ltd.) to peel the jig from the overcoating film surface, whereby an adhesive strength (force required for cohesive failure and/or interfacial peeling) was measured. The results are listed on Tables 1 to 5.

**[Table 1]**

| | | | | | | Comparative example 1 | Example 1 | Example 2 | Example 3 | Example 4 | Example 5 | Example 6 | Example 7 | Example 8 | Example 9* | Example 10* |
|---|---|---|---|---|---|---|---|---|---|---|---|---|---|---|---|---|
| | Base component | Solution of condensate of alkylsilicate | | | | 60.0 | 60.0 | 60.0 | 60.0 | 60.0 | 60.0 | 60.0 | 60.0 | 60.0 | 60.0 | 60.0 |
| | | Colloidal silica | | | | | | | | | | | | | | |
| | | Acrylic emulsion | | | | | | | | | | | | | | |
| | | Ammonium silicate | | | | | | | | | | | | | | |
| | | Spherical zinc powder | | | | 15.0 | 15.0 | 15.0 | 15.0 | 15.0 | 15.0 | 15.0 | 15.0 | 15.0 | 15.0 | 15.0 |
| | | Flaky zinc powder | | | | 5.0 | 5.0 | 5.0 | 5.0 | 5.0 | 5.0 | 5.0 | 5.0 | 5.0 | 5.0 | 5.0 |
| | | Flaky zinc alloy powder | | | | | | | | | | | | | | |
| | | Anti-settling agent I | | | | 2.0 | 2.0 | 2.0 | 2.0 | 2.0 | 2.0 | 2.0 | 2.0 | 2.0 | 2.0 | 2.0 |
| | | Anti-settling agent II | | | | | | | | | | | | | | |
| | | Potassium feldspar | | | | | | | | | | | | | | |
| | | Glass powder 1 (softening point 389°C) | | | | | | | | | | | | | | |
| Coating composition | Pigment paste component | Glass powder 2 (softening point 400°C) | | | | | | | | | | | | | | |
| | | Glass powder 3 (softening point 480°C) | | | | | | | | | | | | | | |
| | | Glass powder 4 (softening point 605°C) | | | | | 0.02 | 0.025 | 0.05 | 0.25 | 0.50 | 0.75 | 1.00 | 1.50 | 5.00 | 10.00 |
| | | Glass powder 5 (softening point 700°C) | | | | | | | | | | | | | | |
| | | Glass powder 6 (softening point 790°C) | | | | | | | | | | | | | | |
| | | Glass powder 7 (softening point 808°C) | | | | | | | | | | | | | | |
| | | Glass powder 8 (softening point 510°C) | | | | | | | | | | | | | | |
| | | Glass powder 9 (softening point 750°C) | | | | | | | | | | | | | | |
| | | Organic solvent | | Xylene | | 13.0 | 12.98 | 12.975 | 12.95 | 12.75 | 12.50 | 12.25 | 12.00 | 11.50 | 13.00 | 13.00 |
| | | | | Butyl acetate | | 2.5 | 2.5 | 2.5 | 2.5 | 2.5 | 2.5 | 2.5 | 2.5 | 2.5 | 2.5 | 2.5 |
| | | | | Isobutyl alcohol | | 2.5 | 2.5 | 2.5 | 2.5 | 2.5 | 2.5 | 2.5 | 2.5 | 2.5 | 2.5 | 2.5 |
| | Diluent | Ion exchange water | | | | | | | | | | | | | | |
| | Total (in terms of mass) | | | | | 100.00 | 100.00 | 100.00 | 100.00 | 100.00 | 100.00 | 100.00 | 100.00 | 100.00 | 105.00 | 110.00 |
| Coating composition property | Amount (% by mass) of zinc powder in non-volatile content of composition Amount (% by mass) of glass powder in non-volatile content of composition Solid amount (% by mass) of binder in non-volatile content of composition Mass ratio of glass powder /zinc powder of composition Solvent amount (% by mass) in composition Content (% by mass) of Li₂O,K₂O,Na₂O in glass powder | | | | | 67.66 | 67.61 | 67.60 | 67.54 | 67.09 | 66.53 | 65.98 | 65.45 | 64.39 | 57.87 | 50.56 |
| | | | | | | - | 0.068 | 0.085 | 0.169 | 0.839 | 1.663 | 2.474 | 3.272 | 4.829 | 14.468 | 25.278 |
| | | | | | | 25.58 | 25.56 | 25.55 | 25.53 | 25.36 | 25.15 | 24.94 | 24.74 | 24.34 | 21.88 | 19.11 |
| | | | | | | - | 0.0010 | 0.0013 | 0.0025 | 0.0125 | 0.0250 | 0.0375 | 0.0500 | 0.0750 | 0.2500 | 0.5000 |
| | | | | | | 70.44 | 70.42 | 70.42 | 70.39 | 70.19 | 69.94 | 69.69 | 69.44 | 68.94 | 67.09 | 64.04 |
| | | | | | | - | 3 | 3 | 3 | 3 | 3 | 3 | 3 | 3 | 3 | 3 |
| Coating film properties | Average dry film thickness (µm) | | | | | 9 | 8 | 9 | 9 | 8 | 8 | 8 | 7 | 8 | 8 | 8 |
| | Rust prevention properties | | Process conditions of test plate | | No heating | 10 | 10 | 10 | 10 | 10 | 10 | 10 | 10 | 10 | 8 | 5 |
| | | | | | 800°C, heating for 3 min. | 1 | 5 | 5 | 6 | 7 | 10 | 10 | 10 | 10 | 8 | 5 |
| | Overcoating adhesion property | | Adhesive strength (MPa) | | | 4.2 | 4.5 | 4.0 | 4.5 | 5.0 | 4.2 | 4.3 | 4.6 | 4.4 | 4.8 | 4.3 |

| | | | | | | | | | | | | | | | | |
|---|---|---|---|---|---|---|---|---|---|---|---|---|---|---|---|---|
| * Examples 9 and 10 are for reference only and outside the scope of the claimed invention. | | | | | | | | | | | | | | | | |

**[Table 2]**

| | | | | Comparative example 1 | Comparative example 2 | Example 11 | Example 12 | Example 6 | Example 13 | Example 14 | Comparative example 3 |
|---|---|---|---|---|---|---|---|---|---|---|---|
| | Base component | Solution of condensate of alkylsilicate | | 60.0 | 60.0 | 60.0 | 60.0 | 60.0 | 60.0 | 60.0 | 60.0 |
| | | Colloidal silica | | | | | | | | | |
| | | Acrylic emulsion | | | | | | | | | |
| | | Ammonium silicate | | | | | | | | | |
| | | Spherical zinc powder | | 15.0 | 15.0 | 15.0 | 15.0 | 15.0 | 15.0 | 15.0 | 15.0 |
| | | Flaky zinc powder | | 5.0 | 5.0 | 5.0 | 5.0 | 5.0 | 5.0 | 5.0 | 5.0 |
| | | Flaky zinc alloy powder | | | | | | | | | |
| | | Anti-settling agent I | | 2.0 | 2.0 | 2.0 | 2.0 | 2.0 | 2.0 | 2.0 | 2.0 |
| | | Anti-settling agent II | | | | | | | | | |
| | | Potassium feldspar | | | | | | | | | |
| | | Glass powder 1 (softening point 389°C) | | | 0.75 | | | | | | |
| Coating composition | | Glass powder 2(softening point 400°C) | | | | 0.75 | | | | | |
| | Pigment paste component | Glass powder 3(softening point 480°C) | | | | | 0.75 | | | | |
| | | Glass powder 4(softening point 605°C) | | | | | | 0.75 | | | |
| | | Glass powder 5(softening point 700°C) | | | | | | | 0.75 | | |
| | | Glass powder 6(softening point 790°C) | | | | | | | | 0.75 | |
| | | Glass powder 7(softening point 808°C) | | | | | | | | | 0.75 |
| | | Glass powder 8(softening point 510°C) | | | | | | | | | |
| | | Glass powder 9(softening point 750°C) | | | | | | | | | |
| | | Organic solvent | Xylene | 13.0 | 12.25 | 12.25 | 12.25 | 12.25 | 12.25 | 12.25 | 12.25 |
| | | | Butyl acetate | 2.5 | 2.5 | 2.5 | 2.5 | 2.5 | 2.5 | 2.5 | 2.5 |
| | | | Isobutyl alcohol | 2.5 | 2.5 | 2.5 | 2.5 | 2.5 | 2.5 | 2.5 | 2.5 |
| | Diluent | Ion exchange water | | | | | | | | | |
| | Total (in terms of mass) | | | 100.00 | 100.00 | 100.00 | 100.00 | 100.00 | 100.00 | 100.00 | 100.00 |
| Coating composition property | Amount (% by mass) of zinc powder in non-volatile content of composition Amount (% by mass) of glass powder in non-volatile content of composition Solid amount (% by mass) of binder in non-volatile content of composition Mass ratio of glass powder /zinc powder of composition Solvent amount (% by mass) in composition Content (% by mass) of Li₂O.K₂O.Na₂O in glass powder | | | 67.66 | 65.98 | 65.98 | 65.98 | 65.98 | 65.98 | 65.98 | 65.98 |
| | | | | - | 2.474 | 2.474 | 2.474 | 2.474 | 2.474 | 2.474 | 2.474 |
| | | | | 25.58 | 24.94 | 24.94 | 24.94 | 24.94 | 24.94 | 24.94 | 24.94 |
| | | | | - | 0.0375 | 0.0375 | 0.0375 | 0.0375 | 0.0375 | 0.0375 | 0.0375 |
| | | | | 70.44 | 69.69 | 69.69 | 69.69 | 69.69 | 69.69 | 69.69 | 69.69 |
| | | | | - | Not more than 1 | Not more than 1 | Not more than 1 | 3 | 10 | Not more than 1 | Not more than 1 |
| | Average dry film thickness (µm) | | | 9 | 7 | 8 | 8 | 8 | 9 | 9 | 8 |
| | | | No heating | 10 | 10 | 10 | 10 | 10 | 10 | 10 | 10 |
| | | | 400°C, heating for 3 min. | 10 | 10 | 10 | 10 | 10 | 10 | 10 | 10 |
| | | | 500°C, heating for 3 min. | 10 | 10 | 10 | 10 | 10 | 10 | 10 | 10 |
| | Rust prevention properties | Process conditions of test plate | 600°C, heating for 3 min. | 6 | 6 | 6 | 10 | 10 | 6 | 6 | 6 |
| Coating film properties | | | 700°C, heating for 3 min. | 2 | 4 | 5 | 10 | 10 | 6 | 6 | 2 |
| | | | 800°C, heating for 3 min. | 1 | 4 | 5 | 10 | 10 | 6 | 6 | 1 |
| | | | 900°C, heating for 3 min. | 1 | 3 | 5 | 7 | 7 | 6 | 5 | 1 |
| | | | 1000°C, heating for 3 min. | 1 | 1 | 1 | 1 | 1 | 1 | 1 | 1 |
| | Overcoating adhesion property | Adhesive strength (MPa·s) | | 4.2 | 4.3 | 4.4 | 4.2 | 4.3 | 4.3 | 4.2 | 4.3 |

**[Table 3]**

| | | | | Example 15 | Comparative example 4 | Example 16 | Comparative example 5 | Example 17 |
|---|---|---|---|---|---|---|---|---|
| | Base component | Solution of condensate of alkylsilicate | | 60.0 | | | | |
| | | Colloidal silica | | | 35.0 | 35.0 | | |
| | | Acrylic emulsion | | | 1.17 | 1.17 | | |
| | | Ammonium silicate | | | | | 30.24 | 30.24 |
| | | Spherical zinc powder | | 20.0 | 20.0 | 20.0 | 20.0 | 20.0 |
| | | Flaky zinc powder | | | | | | |
| | | Flaky zinc alloy powder | | | | | | |
| | | Anti-settling agent I | | 2.0 | | | | |
| | | Anti-settling agent II | | | 2.0 | 2.0 | 2.0 | 2.0 |
| | | Potassium feldspar | | | | | | |
| | | Glass powder 1 (softening point 389°C) | | | | | | |
| Coating composition | | Glass powder 2(softening point 400°C) | | | | | | |
| | Pigment paste component | Glass powder 3(softeninq point 480°C) | | | | | | |
| | | Glass powder 4(softening point 605°C) | | 0.75 | | 0.75 | | 0.75 |
| | | Glass powder 5(softening point 700°C) | | | | | | |
| | | Glass powder 6(softening point 790°C) | | | | | | |
| | | Glass powder 7(softeninq point 808°C) | | | | | | |
| | | Glass powder 8(softening point 510°C) | | | | | | |
| | | Glass powder 9(softening point 750°C) | | | | | | |
| | | Organic solvent | Xylene | 12.25 | | | | |
| | | | Butyl acetate | 2.5 | | | | |
| | | | Isobutyl alcohol | 2.5 | | | | |
| | Diluent | Ion exchange water | | | 41.0 | 40.0 | 46.0 | 45.0 |
| | Total (in terms of mass) | | | 100.00 | 99.17 | 98.92 | 98.24 | 97.99 |
| Coating composition property | Amount (% by mass) of zinc powder in non-volatile content of composition Amount (% by mass) of glass powder in non-volatile content of composition Solid amount (% by mass) of binder in non-volatile content of composition Mass ratio of glass powder /zinc powder of composition Solvent amount (% by mass) in composition Content (% by mass) of Li₂O,K₂O,Na₂O in glass powder | | | 65.98 | 67.66 | 65.98 | 67.66 | 65.98 |
| | | | | 2.474 | - | 2.474 | - | 2.474 |
| | | | | 24.94 | 25.58 | 24.95 | 25.58 | 24.94 |
| | | | | 0.0375 | - | 0.0375 | - | 0.0375 |
| | | | | 69.69 | 70.19 | 69.36 | 69.91 | 69.07 |
| | | | | 3 | - | 3 | - | 3 |
| Coating film properties | Average dry film thickness (µm) | | | 15 | 14 | 14 | 15 | 15 |
| | Rust prevention properties | Process conditions of test plate | No heating | 10 | 10 | 10 | 10 | 10 |
| | | | 800°C, heating for 3 min. | 10 | 1 | 10 | 1 | 10 |
| | Overcoating adhesion property | Adhesive strength (MPa·s) | | 4.3 | 3.8 | 3.9 | 3.4 | 3.5 |

**[Table 4]**

| | | | | Example 6 | Example 18 | Example 19 | Example 20 | Example 21 | Example 22 | Example 23 |
|---|---|---|---|---|---|---|---|---|---|---|
| | Base component | Solution of condensate of alkylsilicate | | 60.0 | 30.0 | 40.0 | 50.0 | 60.0 | 60.0 | 60.0 |
| | | Colloidal silica | | | | | | | | |
| | | Acrylic emulsion | | | | | | | | |
| | | Ammonium silicate | | | | | | | | |
| | | Spherical zinc powder | | 15.0 | 20.0 | 20.0 | 20.0 | 20.0 | | |
| | | Flaky zinc powder | | 5.0 | 5.0 | 5.0 | 5.0 | | 20.0 | |
| | | Flaky zinc alloy powder | | | | | | | | 20.0 |
| | | Anti-settling agent I | | 2.0 | 2.0 | 2.0 | 2.0 | 2.0 | 2.0 | 2.0 |
| | | Anti-settling agent II | | | | | | | | |
| | | Potassium feldspar | | | 22.0 | 17.0 | 10.0 | | | |
| | | Glass powder 1 (softening point 389°C) | | | | | | | | |
| Coating composition | | Glass powder 2 (softening point 400°C) | | | | | | | | |
| | Pigment paste component | Glass powder 3 (softening point 480°C) | | | | | | | | |
| | | Glass powder 4 (softening point 605°C) | | 0.75 | 0.95 | 0.95 | 0.95 | 0.75 | 0.75 | 0.75 |
| | | Glass powder 5 (softening point 700°C) | | | | | | | | |
| | | Glass powder 6 (softening point 790°C) | | | | | | | | |
| | | Glass powder 7 (softening point 808°C) | | | | | | | | |
| | | Glass powder 8 (softening point 510°C) | | | | | | | | |
| | | Glass powder 9 (softening point 750°C) | | | | | | | | |
| | | Organic solvent | Xylene | 12.25 | 10.0 | 8.0 | 6.0 | 12.25 | 12.25 | 12.25 |
| | | | Butyl acetate | 2.5 | 5.0 | 4.0 | 3.0 | 2.5 | 2.5 | 2.5 |
| | | | Isobutyl alcohol | 2.5 | 5.0 | 4.0 | 3.0 | 2.5 | 2.5 | 2.5 |
| | Diluent | Ion exchange water | | | | | | | | |
| | Total (in terms of mass) | | | 100.00 | 99.95 | 100.95 | 99.95 | 100.00 | 100.00 | 100.00 |
| Coating composition property | Amount (% by mass) of zinc powder in non-volatile content of composition Amount (% by mass) of glass powder in non-volatile content of composition Solid amount (% by mass) of binder in non-volatile content of composition Mass ratio of glass powder /zinc powder of composition Solvent amount (% by mass) in composition Content (% by mass) of Li₂O,K₂O,Na₂O in glass powder | | | 65.98 | 46.53 | 50.01 | 56.50 | 65.98 | 65.98 | 65.98 |
| | | | | 2.474 | 1.768 | 1.900 | 2.147 | 2.474 | 2.474 | 2.474 |
| | | | | 24.94 | 7.04 | 10.08 | 14.24 | 24.94 | 24.94 | 24.94 |
| | | | | 0.0375 | 0.0380 | 0.0380 | 0.0380 | 0.0375 | 0.0375 | 0.0375 |
| | | | | 69.69 | 46.24 | 50.48 | 55.73 | 69.69 | 69.69 | 69.69 |
| | | | | 3 | 3 | 3 | 3 | 3 | 3 | 3 |
| Coating film properties | Average dry film thickness (µm) | | | 8 | 20 | 18 | 16 | 15 | 8 | 9 |
| | Rust prevention properties | Process conditions of test plate | No heating | 10 | 10 | 10 | 10 | 10 | 10 | 10 |
| | | | 800°C, heating for 3 min. | 10 | 10 | 10 | 10 | 10 | 9 | 7 |
| | Overcoating adhesion property | Adhesive strength (MPa·s) | | 4.3 | 4.3 | 4.2 | 4.1 | 4.3 | 4.5 | 4.5 |

**[Table 5]**

| | | | | | Comparative example 6 | Example 13 | Comparative example 7 | Example 14 |
|---|---|---|---|---|---|---|---|---|
| | Base component | Solution of condensate of alkylsilicate | | | 60.0 | 60.0 | 60.0 | 60.0 |
| | | Colloidal silica | | | | | | |
| | | Acrylic emulsion | | | | | | |
| | | Ammonium silicate | | | | | | |
| | | Spherical zinc powder | | | 15.0 | 15.0 | 15.0 | 15.0 |
| | | Flaky zinc powder | | | 5.0 | 5.0 | 5.0 | 5.0 |
| | | Flaky zinc alloy powder | | | | | | |
| | | Anti-settling agent I | | | 2.0 | 2.0 | 2.0 | 2.0 |
| | | Anti-settling agent II | | | | | | |
| | | Potassium feldspar | | | | | | |
| | | Glass powder 1 (softening point 389°C) | | | | | | |
| Coating composition | | Glass powder 2 (softening point 400°C) | | | | | | |
| | Pigment paste component | Glass powder 3 (softening point 480°C) | | | | | | |
| | | Glass powder 4 (softening point 605°C) | | | | | | |
| | | Glass powder 5 (softening point 700°C) | | | | 0.75 | | |
| | | Glass powder 6 (softening point 790°C) | | | | | | 0.75 |
| | | Glass powder 7 (softening point 808°C) | | | | | | |
| | | Glass powder 8 (softening point 510°C) | | | 0.75 | | | |
| | | Glass powder 9 (softening point 750°C) | | | | | 0.75 | |
| | | Organic solvent | Xylene | | 12.25 | 12.25 | 12.25 | 12.25 |
| | | | Butyl acetate | | 2.5 | 2.5 | 2.5 | 2.5 |
| | | | Isobutyl alcohol | | 2.5 | 2.5 | 2.5 | 2.5 |
| | Diluent | Ion exchange water | | | | | | |
| | Total (in terms of mass) | | | | 100.00 | 100.00 | 100.00 | 100.00 |
| Coating composition property | Amount (% by mass) of zinc powder in non-volatile content of composition Amount (% by mass) of glass powder in non-volatile content of composition Solid amount (% by mass) of binder in non-volatile content of composition Mass ratio of glass powder /zinc powder of composition Solvent amount (% by mass) in composition Content (% by mass) of Li₂O,K₂O,Na₂O in glass powder | | | | 65.98 | 65.98 | 65.98 | 65.98 |
| | | | | | 2.474 | 2.474 | 2.474 | 2.474 |
| | | | | | 24.94 | 24.94 | 24.94 | 24.94 |
| | | | | | 0.0375 | 0.0375 | 0.0375 | 0.0375 |
| | | | | | 69.69 | 69.69 | 69.69 | 69.69 |
| | | | | | 22 | 10 | 14 | Not more than 1 |
| Coating film properties | Average dry film thickness (µm) | | | | 8 | 9 | 9 | 9 |
| | Rust prevention properties | Process conditions of test plate | | No heating | 10 | 10 | 10 | 10 |
| | | | | 800°C, heating for 3 min. | 10 | 6 | 6 | 6 |
| | Overcoating adhesion property | Adhesive strength (MPa•) | | | 1.8 | 4.3 | 1.6 | 4.2 |

**[Table 6]**

| Component | Raw material * | Blending amount (parts by mass) |
|---|---|---|
| Base component | Xylene | 8.9 |
| | Novares CA 100 | 7.5 |
| | Novares LA 300 | 7.5 |
| | Epicoat 828 | 15.0 |
| | TTK talc | 25.0 |
| | Ceramic powder OF-T | 20.0 |
| | Zinc oxide JIS #3 | 4.0 |
| | Mitsubishi Carbon Black | 0.1 |
| | MA100 | |
| Curing agent component | PMD-200 | 12.0 |
| Total | 100.0 | |

| | | |
|---|---|---|
| ^{*}Novares CA 100: petroleum resin, Rutgers Chemicals Novares LA 300: phenol oligomer, Rutgers Chemicals Epicoat 828: bisphenol A-type liquid epoxy resin, Japan Epoxy Resin Co., Ltd. TTK talc: talc, Takehara Chemical Industry Co., Ltd. ceramic powder OF-T: potassium feldspar, KINSEI MATEC CO., LTD. zinc oxide JIS #3: zinc oxide, Hakusui Tech Co., Ltd. Mitsubishi Carbon Black MA100: carbon black, Mitsubishi Chemical Corporation PMD-200: modified polyamide resin, OHTAKE MEISHIN CHEMICAL, CO., LTD. | | |

## Claims

1. A rust-preventive coating composition comprising:
a binder (a);
a zinc powder and/or zinc alloy powder (b); and
a glass powder (c) which has a softening point of from 400 to 800°C and in which the total content of Li₂O, Na₂O and K₂O is not more than 12% by mass,
wherein the mass ratio ((c)/(b)) of the glass powder (c) to the zinc powder and/or zinc alloy powder (b) is from 0.001 to 0.10, and
the binder (a) is a silicon based binder.

2. The rust-preventive coating composition according to claim 1, wherein
the binder (a) is a condensate of alkylsilicates, a condensate of methyltrialkoxysilanes, ammonium silicates, or an aqueous dispersion of colloidal silica.

3. The rust-preventive coating composition according to claim 1 or 2, which is a primary rust-preventive coating composition.

4. A rust-preventive coating film formed from the rust-preventive coating composition according to any one of claims 1 to 3.

5. A substrate with a rust-preventive coating film comprising a substrate and the rust-preventive coating film according to claim 4 formed on a surface of the substrate.

6. A method for producing a substrate with a rust-preventive coating film comprising: a step of applying the rust-preventive coating composition according to any one of claims 1 to 3 on a surface of a substrate; and a step of curing the coating composition applied to form a rust-preventive coating film.

## Patentansprüche

1. Rostschutzbeschichtungszusammensetzung, umfassend:
eine Bindemittel (a),
ein Zinkpulver und/oder Zinklegierungspulver (b) und
ein Glaspulver (c), das einen Erweichungspunkt von 400 bis 800°C aufweist und in dem der Gesamtgehalt von Li₂O, Na₂O und K₂O nicht mehr als 12 Masse-% beträgt,
wobei das Masseverhältnis ((c)/(b)) des Glaspulvers (c) zu dem Zinkpulver und/oder Zinklegierungspulver (b) 0,001 bis 0,10 beträgt und
das Bindemittel (a) ein Bindemittel auf Siliciumbasis ist.

2. Rostschutzbeschichtungszusammensetzung gemäß Anspruch 1, wobei
das Bindemittel (a) ein Kondensat aus Alkylsilikaten, ein Kondensat aus Methyltrialkoxysilanen, Ammoniumsilikate oder eine wässrige Dispersion von kolloidalem Siliciumdioxid ist.

3. Rostschutzbeschichtungszusammensetzung gemäß Anspruch 1 oder 2, die eine primäre Rostschutzbeschichtungszusammensetzung ist.

4. Rostschutzbeschichtungsfilm, der aus der Rostschutzbeschichtungszusammensetzung gemäß einem der Ansprüche 1 bis 3 gebildet ist.

5. Substrat, mit einem Rostschutzbeschichtungsfilm, umfassend ein Substrat und den Rostschutzbeschichtungsfilm gemäß Anspruch 4, der auf einer Oberfläche des Substrats gebildet ist.

6. Verfahren zur Herstellung eines Substrats mit einem Rostschutzbeschichtungsfilm, umfassend: einen Schritt zum Auftragen der Rostschutzbeschichtungszusammensetzung gemäß einem der Ansprüche 1 bis 3 auf einer Oberfläche eines Substrats und einen Schritt zum Härten der aufgetragenen Beschichtungszusammensetzung, um einen Rostschutzbeschichtungsfilm zu bilden.

## Revendications

1. Composition de revêtement antirouille comprenant :
un liant (a) ;
une poudre de zinc et/ou une poudre d'alliage de zinc (b) ; et
une poudre de verre (c) qui présente un point de ramollissement de 400 à 800 °C et dans laquelle la teneur totale en Li₂O, Na₂O et K₂O n'est pas supérieure à 12 % en masse,
dans laquelle le rapport en masse ((c)/(b)) de la poudre de verre (c) sur la poudre de zinc et/ou la poudre d'alliage de zinc (b) est de 0,001 à 0,10, et
le liant (a) est un liant à base de silicium.

2. Composition de revêtement antirouille selon la revendication 1, dans laquelle
le liant (a) est un condensat d'alkylsilicates, un condensat de méthyltrialcoxysilanes, des silicates d'ammonium, ou une dispersion aqueuse de silice colloïdale.

3. Composition de revêtement antirouille selon la revendication 1 ou 2, qui est une composition de revêtement antirouille primaire.

4. Film de revêtement antirouille formé à partir de la composition de revêtement antirouille selon l'une quelconque des revendications 1 à 3.

5. Substrat avec un film de revêtement antirouille comprenant un substrat et le film de revêtement antirouille selon la revendication 4 formé sur une surface du substrat.

6. Procédé de production d'un substrat avec un film de revêtement antirouille comprenant : une étape d'application de la composition de revêtement antirouille selon l'une quelconque des revendications 1 à 3 sur une surface d'un substrat ; et une étape de durcissement de la composition de revêtement appliquée pour former un film de revêtement antirouille.
